# EUROPÄISCHE PATENTSCHRIFT

(11) **EP 2 189 233 B1**
(45) Veröffentlichungstag und Bekanntmachung des Hinweises auf die Patenterteilung: **06.07.2011**
(21) Anmeldenummer: 09175812.8
(22) Anmeldetag: 12.11.2009
(51) Int. Cl.: B23C 3/34, F01D 5/08, B23P 6/00

(54) **Verfahren zum Bearbeiten eines Gasturbinenläufers**
Method for machining a gas turbine rotor
Procédé d'usinage d'un rotor d'une turbine à gaz

(30) Priorität: 19.11.2008 CH 18052008
(43) Veröffentlichungstag der Anmeldung: 26.05.2010
(73) Patentinhaber: Alstom Technology Ltd, 5400 Baden (CH)
(72) Erfinder: Storch, Wilfried, D-13158, Berlin (DE); Gnirss, Günter, D-69469, Weinheim (DE); Meixner, Bernd, D-69190, Walldorf (DE); Geissel, Uwe, D-67435, Neustadt (DE); Schwaar, Michael, D-09232, Hartmannsdorf (DE)

(56) Entgegenhaltungen:
- EP-A- 1 862 638
- WO-A-03/006196

## Beschreibung

### TECHNISCHES GEBIET

Die vorliegende Erfindung bezieht sich auf das Gebiet der Gasturbinen. Sie betrifft ein Verfahren zum Bearbeiten eines Gasturbinenläufers, gemäss dem Oberbegriff des Anspruchs 1. Ein solches Verfahren ist aus der EP-A1-1 862 638 bekannt.

### STAND DER TECHNIK

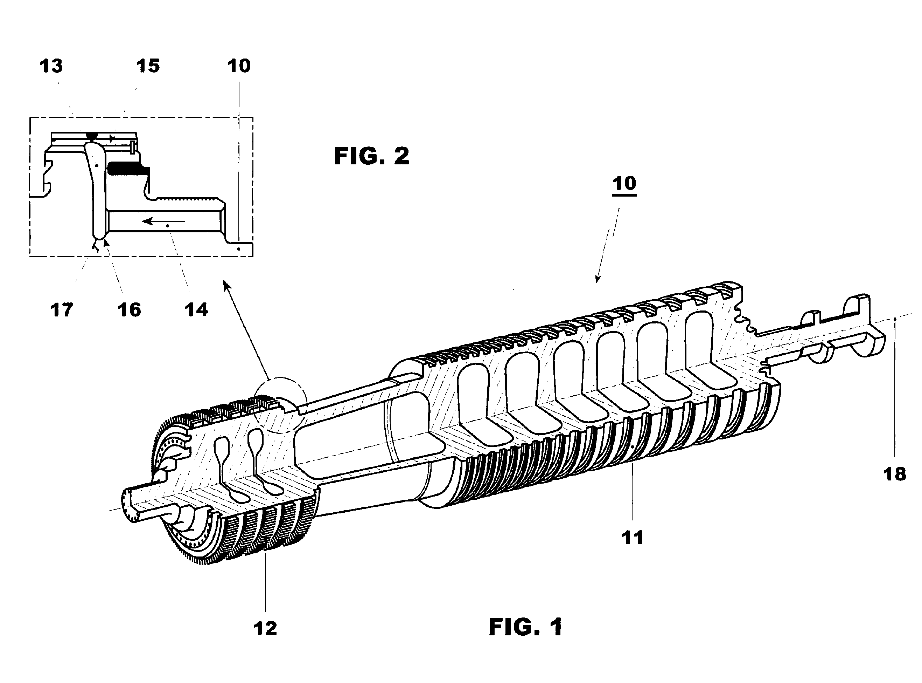

Ein Gasturbinenläufer, wie er beispielsweise bei den Gasturbinen vom Typ GT11 und GT13 der Anmelderin eingesetzt wird, ist aus der Druckschrift EP-A2-1 705 339 (siehe die dortige Fig. 1) bekannt. Ein solcher Gasturbinenläufer ist auch in Fig. 1 und 2 der vorliegenden Anmeldung dargestellt. Der in Fig. 1 abgebildete Gasturbinenläufer 10 ist in Richtung der Achse 18 in an sich bekannter Weise aus miteinander verschweissten Rotorscheiben aufgebaut und weist ein Verdichterteil 11 und ein Turbinenteil 12 auf, zwischen denen im zusammengebauten Zustand der Gasturbine die Brennkammer angeordnet ist.

Fig. 3 entspricht der Fig. 5 aus der EP-A1-1 862 638 und zeigt einen vergrösserten Ausschnitt des an die Brennkammer angrenzenden Turbinenteils 12.

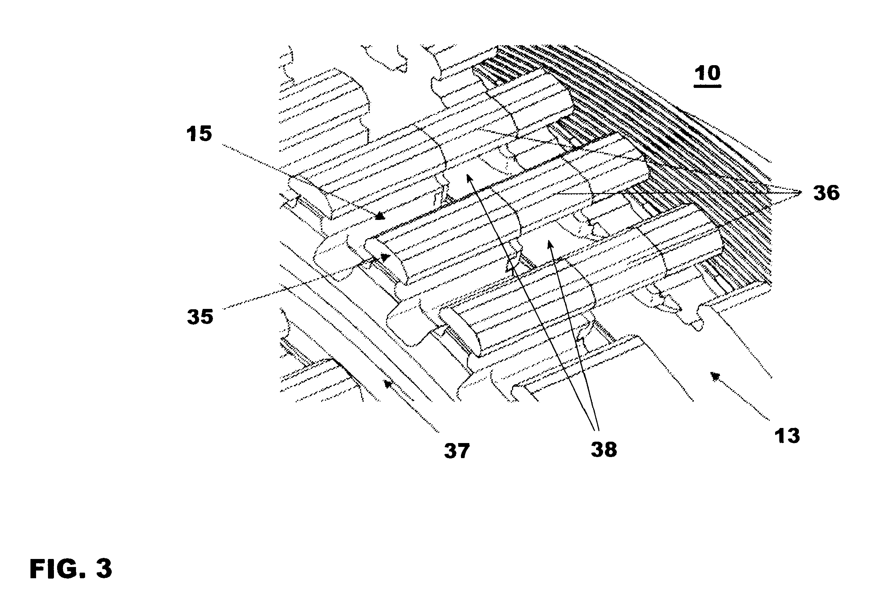

In beiden Teilen 11 und 12 sind in axialer Richtung hintereinander mehrere Reihen von Laufschaufeln befestigt, die in Fig. 1 nicht dargestellt sind. Die Laufschaufeln werden mit entsprechend gestalteten Schaufelfüssen in umlaufende Laufschaufelaufnahmen (37 in Fig. 3) eingeschoben. In Strömungsrichtung vor der ersten Laufschaufelaufnahme 37 des Turbinenteils 12. ist ein Wärmestausegmentträger 35 ausgebildet, der über den Umfang verteilt eine Vielzahl von axialen Wärmestausegmentaufnahmen 15 aufweist. Unterhalb des Wärmestausegmentträgers 35 ist eine umlaufende Kühlluftnut 13 angeordnet, die durch über den Umfang verteilte axiale Kühlluftbohrungen 14 (Fig. 2) mit komprimierter Kühlluft aus dem Verdichterteil der Gasturbine beaufschlagt wird. Die Kühlluftnut 13 ist teilweise von durch Zwischenräume 38 beabstandeten Stegen 36 überdeckt, die einen Zugang zur Kühlluftnut 13 auf die Zwischenräume 38 beschränken.

In derartigen Gasturbinenläufern können abhängig von der Betriebsweise und Betriebszeit im Nutgrund 16 der Kühlluftnut 13 umlaufende Anrisse bzw. Risse 17 auftreten (Fig. 2). Die Anrisse wachsen bei jedem Start weiter und führen nach Erreichen einer bestimmten Risstiefe zum instabilen Risswachstum durch Umlaufbiegebeanspruchung und beeinträchtigen elementar die Bauteilbetriebssicherheit. Deshalb müssen Anrisse im besonderen im Nutgrund 16 von Turbinenwellen zuverlässig vermieden werden.

Entsprechende, nach den Befunden mit Rissfeststellung ausgeführte Festigkeitsberechnungen belegen, dass der starke betriebsbedingte Wärmeeintrag beim Start der Anlage in Verbindung mit der hohen Kerbwirkung der Nutgeometrie nach bisherigem Design gemäss Fig. 2 zu erheblichen Wechselplastifizierungen führt, welche die Rissausbildung verursachen.

Eine Nutgeometrie für neu gefertigte Rotoren berücksichtigt daher beide Kriterien (Wärmeeintrag als Belastungsschock und Kerbwirkung der Altnutgeometrie) mit breiterer Nut zur Reduzierung der Luftgeschwindigkeit und entschärften Übergangsradien des Nutgrundes zu den Nutflanken. Die bisherigen Reparaturansätze gehen davon aus, die neue Nutgeometrie durch Ausdrehen der Nut, d.h. Vergrösserung der Altnutgeometrie auszuführen. Dabei werden die Stege 36 der Wärmestausegmentträger 35 über die Nutbreite entfernt, was die Tragstabilität der verbliebenen Stegabschnitte als Führung für die nutüberdeckenden Abdecksegmente reduziert oder die nachträgliche Anordnung der Stege 36 durch Schweissverbindungen und Wärmenachbehandlung derselben erfordert.

### DARSTELLUNG DER ERFINDUNG

Es ist daher eine Aufgabe der Erfindung, ein Verfahren zur Bearbeitung eines Gasturbinenläufers anzugeben, mit dem bei rissbehafteten Kühlluftnuten mit teilüberdeckten Stegen der Nutgrund und die Nutflanken der Kühlluftnuten durch Ausführung einer neuen Nutkontur rissfrei gemacht werden, ohne dass Schweißungen mit nachfolgender Wärmebehandlung in Verbindung mit der Stegerneuerung notwendig sind.

Der Erfindung liegt weiterhin die Aufgabe zu Grunde, eine Nutform zu nutzen, mit der Risse als betriebsbedingte Bauteilreaktion vermieden werden.

Die Aufgabe wird durch die Gesamtheit der Merkmale des Anspruchs 1 gelöst. Wesentlich für die erfindungsgemässe Lösung ist, dass in den Zwischenräumen zwischen den Stegen nacheinander ein materialabtragendes Werkzeug, insbesondere ein Fräswerkzeug, in die Kühlluftnut abgesenkt und der Nutgrund der Kühlluftnut so über den ganzen Umfang bearbeitet wird, und dass der Nutgrund der Kühlluftnut durch den Materialabtrag in der Breite derart erweitert wird, dass er eine tropfenförmige Querschnittskontur mit einer auf der Höhe der Stege liegenden Engstelle aufweist.

Gemäss einer Ausgestaltung der Erfindung wird durch jeden der Zwischenräume ein bestimmter Abschnitt der Kühlluftnut bearbeitet, wobei sich die benachbarten Zwischenräumen zugeordneten Bearbeitungsabschnitte überlappen.

Eine weitere Ausgestaltung des erfindungsgemässen Verfahrens zeichnet sich dadurch aus, dass das materialabtragendes Werkzeug in der Kühlluftnut in mehreren Ebenen programmiert steuerbar bewegt wird, dass der Gasturbinenläufer um seine Achse drehbar gelagert ist, und dass, wenn durch einen Zwischenraum hindurch der zugehörige Abschnitt der Kühlluftnut bearbeitet ist, das materialabtragende Werkzeug aus der Kühlluftnut herausgezogen, der Gasturbinenläufer um einen vorgegebenen Winkel um seine Achse gedreht und das materialabtragende Werkzeug in einem neuen Zwischenraum zur Bearbeitung in die Kühlluftnut abgesenkt wird.

Eine andere Ausgestaltung ist dadurch gekennzeichnet, dass die Bearbeitung des Nutgrundes derart ausgeführt wird, dass die Kühlluftnut im Nutgrund eine rissresistente Nutform mit einem Kerbfaktor <1,5 aufweist.

Bevorzugt wird das materialabtragende Werkzeug zur Bearbeitung des Nutgrundes nach Massgabe eines NC-Programms gesteuert. Insbesondere wird dabei aus den individuellen Betriebsdaten des Gasturbinenläufers ein bauteilindividuelles Querschnitts-Endprofil des Nutgrundes bestimmt, wobei das Querschnitts-Endprofil aus einem von mehreren Querschnitts-Masterprofilen durch die Anwendung von Verzerrungsparametern erzeugbar ist, welche ermittelt werden, jedem Querschnitts-Masterprofil ein entsprechendes NC-Programm für die Steuerung des materialabtragenden Werkzeugs zugeordnet ist, und die ermittelten Verzerrungsparameter zur Anpassung des NC-Programms für die Erzeugung des Querschnitts-Endprofils benutzt werden. Die Anpassung des NC-Programms wird vorzugsweise mittels der Verzerrungsparameter Offline mit einem Postprozessor vorgenommen, oder Online in der Maschinensteuerung.

Wenn der Gasturbinenläufer vor der Bearbeitung in der Kühlluftnut Risse einer bestimmten Risstiefe aufweist, wird das durch die Bearbeitung zu erreichende Querschnitts-Endprofil vorzugsweise durch Art und Zustand der Risse mitbestimmt.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen, teilweise geschnittenen Darstellung einen an sich bekannten Gasturbinenläufer mit einer Kühlluftnut im Turbinenteil;
- Fig. 2: einen vergrösserten Ausschnitt aus Fig. 1 mit der Kühlluftnut und einer zugehörigen Kühlluftbohrung;
- Fig. 3: eine perspektivische Darstellung der Wärmestausegmentaufnahme des Gasturbinenläufers aus Fig. 1 mit der darunterliegenden Kühlluftnut;
- Fig. 4: das Prinzip der Bearbeitung der Kühlluftnut gemäss der Erfindung und
- Fig. 5: ein Verfahrensschema gemäss einem Ausführungsbeispiel der Erfindung.

### WEGE ZUR AUSFÜHRUNG DER ERFINDUNG

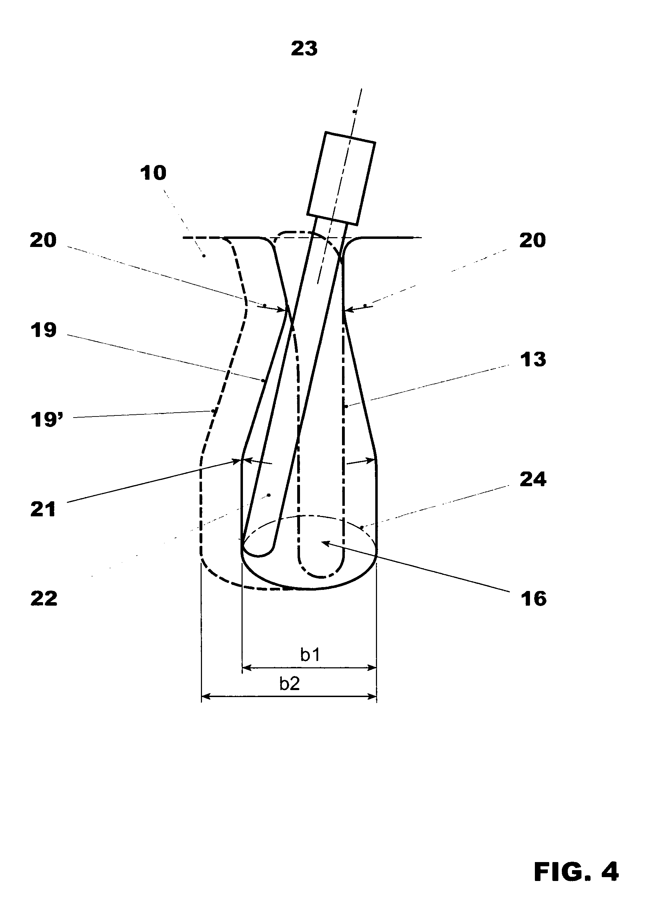

In Fig. 4 ist gestrichelt eine Kühlluftnut 13 eingezeichnet, wie sie auch in Fig. 2 gezeigt ist, und wie sie vor der Bearbeitung gemäss der Erfindung vorliegt. Die Kühlluftnut 13 hat einen sehr schmalen Nutgrund 16, der dazu führt, dass die durch die Kühlluftbohrungen 14 einströmende verdichtete Luft in bestimmten Betriebszuständen die gegenüberliegende Nutflanke lokal aufheizt und thermische Spannungen in der Kühlluftnut verursacht. Ziel des Bearbeitungsverfahrens ist es, ohne Eingriff in die Struktur der Stege 36 (Fig. 3) die darunter liegenden Kühlluftnut - ausgehend von der Querschnittskontur der Kühlluftnut 13 in Fig. 4 - so zu verbreitern, dass die schädlichen Auswirkungen der in die Nut einströmenden Kühlluft massgeblich gemildert werden können.

Dazu wird gemäss Fig. 4 in den Zwischenräumen 38 zwischen den Stegen 36 nacheinander ein materialabtragendes Werkzeug, insbesondere mit einem um eine Achse 23 drehenden länglichen Fräskörper 22, in die Kühlluftnut abgesenkt und der Nutgrund 16 der Kühlluftnut so über den ganzen Umfang verbreitert, dass ein Querschnittsprofil gemäss der in Fig. 4 als Kühlluftnut 19 bzw. Kühlluftnut 19' eingezeichneten Nuten entsteht. Das Fräswerkzeug 22 muss dabei nicht nur in axialer Richtung verschwenkt werden, sondern auch in Umfangsrichtung. Durch diese Art der Bearbeitung wird der Nutgrund der Kühlluftnut durch den Materialabtrag in der Breite (b1, b2) derart erweitert, dass er die in Fig. 4 gezeigte tropfenförmige Querschnittskontur mit einer auf der Höhe der Stege 36 liegenden Engstelle 20 aufweist. Darüber hinaus wird durch das Verschwenken in Umfangsrichtung durch jeden der Zwischenräume 38 ein bestimmter Umgangs-Abschnitt der Kühlluftnut bearbeitet, wobei sich die benachbarten Zwischenräumen zugeordneten Bearbeitungsabschnitte überlappen. Insgesamt ergibt sich so trotz der geometrischen Beschränkung bei den einzelnen Bearbeitungsschritten über den Umfang ein gleichmässig verbreiterter Nutgrund-Querschnitt, wie er in Fig. 4 zu sehen ist. Der abgerundete Übergang zwischen Nutflanken und Nutboden hat dabei vorzugsweise die Form eines Ellipsenabschnitts (Ellipse 24).

Die erfindungsgemässe Nutform wird dabei bestimmt durch eine Nutbreite (b1, b2) als Strömungsstreckenlänge, die die Wirkung der durch die Kühlluftbohrungen zuströmenden Luft aus dem Verdichter derart abschwächt, dass diese keinen unzulässigen Wärmeeintrag in die Nutflanken bewirkt. Der Nutgrund hat dazu eine tropfenförmige Ausbildung mit einer Engstelle 20 und einem Übergang 21 zwischen einem Erweiterungsabschnitt und einem Abschnitt konstanter Breite mit dem Ziel eines Kerbfaktors <1,5 als Gestaltungsmerkmal der rissresistenten Nutform. Aus den individuellen Betriebsdaten jedes Gasturbinenläufers werden mit den bekannten mathematischen Methoden die bauteilindividuelle Form des Nutgrundes bestimmt.

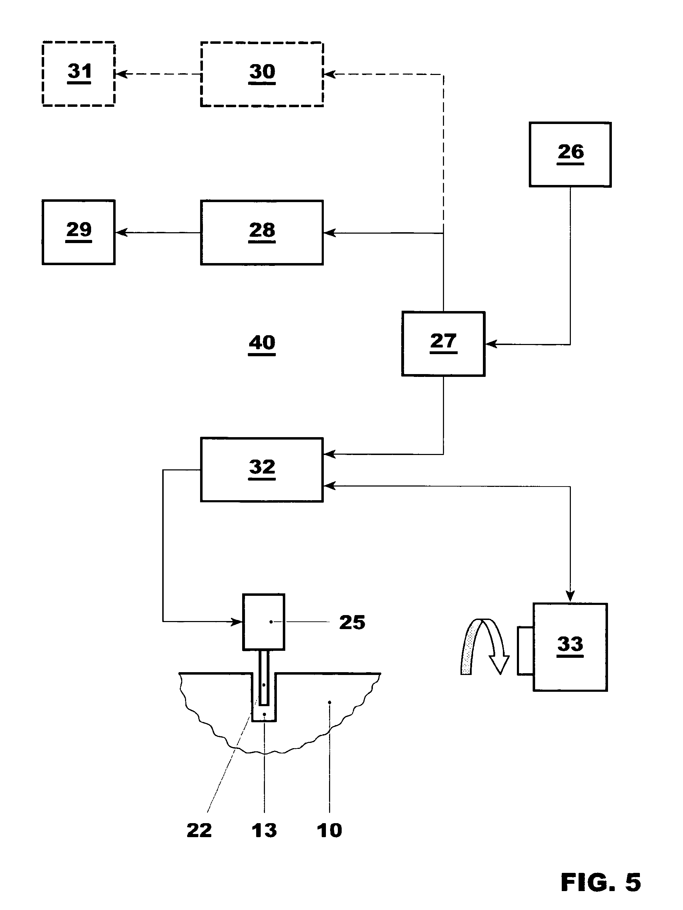

Die neue Nutform wird gemäss Fig. 5 durch ein Ablaufschema 40 bestimmt, indem zunächst der aktuelle Schadenszustand ermittelt wird. Unter Berücksichtigung der Art und Weise der Nutzung des Generators (aus Betriebsdaten 26) wird ein neues Endprofil 29, 31 generiert. Zur Beschreibung des Endprofils 29, 31 wird ein Masterprofil 28, 30 genutzt, das mit bestimmten Verzerrungsparametern 27 verzerrt wird. Es kann mehrere Masterprofile 28, 30 geben, aus denen ein für diesen Rotor spezifisches Profil ausgewählt wird. Zu jedem Masterprofil gehört ein NC-Programm, das einmal manuell erstellt wurde. Die ermittelten Verzerrungsparameter 27 werden genutzt, um auch das NC-Programm in einer NC-Steuerung 32 anzupassen. Damit entfällt die Neuprogrammierung. Die notwendigen Koordinatentransformationen werden entweder Offline in einem Post-Prozessor oder Online direkt in der Maschinensteuerung umgesetzt. Die NC-Steuerung 32 steuert dann eine Fräsmaschine 25 mit dem Fräskörper 22, der durch die Zwischenräume 38 in die zu bearbeitende Kühlluftnut 13 des Gasturbinenläufers 10 eingeführt wird. Ein Drehantrieb 33, der gleichzeitig den Drehwinkel messen kann, ist mit der NC-Steuerung 32 verbunden

Das Werkzeug 22 wird durch die Zwischenräume 38 zwischen den die Nutöffnung abdeckenden Stegen/Stützelementen 36 geführt, so dass diese vom Abspanprozess nicht betroffen sind. Das Werkzeug 22 wird - wie oben beschrieben - durch eine geeignete Antriebseinheit, die ausserhalb der Nut befestigt ist, in der Nut in mehreren Ebenen programmiert steuerbar bewegt. Durch variable Bestückung des Werkzeuges mit unterschiedlichen Schneidkörpern oder unterschiedlichen Werkzeugformen können die Oberflächenrauhigkeit der Bearbeitungszonen und das Oberflächenabtragsprofil variiert werden. Die Antriebseinheit kann ein von aussen (oberhalb der Nut) angesetzter drehzahlsteuerbarer Motor sein.

Die definiert in Kontur und Tiefe abgetragene Bauteiloberflache ist das Ziel des Abtragsprozesses, wobei die abzutragende Oberflächentiefe durch die zuvor oder während des Abtragprozesses ermittelte Risstiefe oder eine neue Nutformgestaltung vorgegeben ist. Das Werkzeug bearbeitet dabei eine durch den Bewegungsraum des Fensters zwischen den Stegen über der Nut begrenzte Nutoberfläche. Um den gesamten Nutumfang von Rissen mittels Abtrag durch Zerspanung zu befreien, erfolgt eine schrittweise Umpositionierung des Aufbaus von Läufer und Werkzeug, bis sich die von Rissen befreiten oder neu zu konturierenden Nutoberflachen überdecken.

### BEZUGSZEICHENLISTE

- 10: Gasturbinenläufer
- 11: Verdichterteil
- 12: Turbinenteil
- 13: Kühlluftnut
- 14: Kühlluftbohrung
- 15: Wärmestausegmentaufnahme
- 16: Nutgrund
- 17: Riss
- 18: Achse (Gasturbinenläufer)
- 19,19': Kühlluftnut (bearbeitet)
- 20: Engstelle
- 21: Übergang
- 22: Fräskörper
- 23: Achse (Frässpindel)
- 24: Ellipse
- 25: Fräsmaschine
- 26: Betriebsdaten
- 27: Verzerrungsparameter
- 28,30: Masterprofil
- 29,31: Endprofil
- 32: NC-Steuerung
- 33: Drehantrieb (mit Drehwinkelmessung)
- 35: Wärmestausegmentträger
- 36: Steg
- 37: Laufschaufelaufnahme
- 38: Zwischenraum
- 40: Ablaufschema
- b1,b2: Breite

## Patentansprüche

1. Verfahren zum Bearbeiten eines Gasturbinenläufers (10), welcher mit einer um die Achse (18) des Gasturbinenläufers (10) konzentrisch umlaufenden Kühlluftnut (19, 19') versehen ist, die über seitlich in den Nutgrund (16) der Kühlluftnut (19, 19') einmündende axiale Kühlluftbohrungen (14) mit komprimierter Kühlluft versorgt wird, und deren Öffnung von über den Umfang verteilt angeordneten, voneinander durch Zwischenräume (38) beabstandeten Stegen (36) abgedeckt ist, **dadurch gekennzeichnet, dass** in den Zwischenräumen (38) zwischen den Stegen (36) nacheinander ein materialabtragendes Werkzeug (22, 25), insbesondere ein Fräswerkzeug, in die Kühlluftnut (19, 19') abgesenkt und der Nutgrund (16) der Kühlluftnut (19, 19') so über den ganzen Umfang bearbeitet wird, und dass der Nutgrund (16) der Kühlluftnut (19, 19') durch den Materialabtrag in der Breite (b1, b2) derart erweitert wird, dass er eine tropfenförmige Querschnittskontur mit einer auf der Höhe der Stege (36) liegenden Engstelle (20) aufweist.

2. Verfahren nach Anspruch 1, **dadurch gekennzeichnet, dass** durch jeden der Zwischenräume (38) ein bestimmter Abschnitt der Kühlluftnut (19, 19') bearbeitet wird, und dass sich die benachbarten Zwischenräumen zugeordneten Bearbeitungsabschnitte überlappen.

3. Verfahren nach Anspruch 1 oder 2, **dadurch gekennzeichnet, dass** das materialabtragendes Werkzeug (22, 25) in der Kühlluftnut (19, 19') in mehreren Ebenen programmiert steuerbar bewegt wird, dass der Gasturbinenläufer (10) um seine Achse (18) drehbar gelagert ist, und dass, wenn durch einen Zwischenraum (38) hindurch der zugehörige Abschnitt der Kühlluftnut (19, 19') bearbeitet ist, das materialabtragende Werkzeug (22, 25) aus der Kühlluftnut (19, 19') herausgezogen, der Gasturbinenläufer (10) um einen vorgegebenen Winkel um seine Achse (18) gedreht und das materialabtragende Werkzeug (22, 25) in einem neuen Zwischenraum (38) zur Bearbeitung in die Kühlluftnut (19, 19') abgesenkt wird.

4. Verfahren nach einem der Ansprüche 1 bis 3, **dadurch gekennzeichnet, dass** die Bearbeitung des Nutgrundes (16) derart ausgeführt wird, dass die Kühlluftnut (19, 19') im Nutgrund (16) eine rissresistente Nutform mit einem Kerbfaktor < 1,5 aufweist.

5. Verfahren nach einem der Ansprüche 1 bis 4, **dadurch gekennzeichnet, dass** das materialabtragende Werkzeug (22, 25) zur Bearbeitung des Nutgrundes (16) nach Massgabe eines NC-Programms gesteuert wird.

6. Verfahren nach Anspruch 5, **dadurch gekennzeichnet, dass** aus den individuellen Betriebsdaten des Gasturbinenläufers (10) ein bauteilindividuelles Querschnitts-Endprofil des Nutgrundes (16) bestimmt wird, dass das Querschnitts-Endprofil aus einem von mehreren Querschnitts-Masterprofilen durch die Anwendung von Verzerrungsparametern erzeugbar ist, welche ermittelt werden, dass jedem Querschnitts-Masterprofil ein entsprechendes NC-Programm für die Steuerung des materialabtragenden Werkzeugs (22, 25) zugeordnet ist, und dass die ermittelten Verzerrungsparameter zur Anpassung des NC-Programms für die Erzeugung des Querschnitts-Endprofils benutzt werden.

7. Verfahren nach Anspruch 6, **dadurch gekennzeichnet, dass** die Anpassung des NC-Programms mittels der Verzerrungsparameter Offline mit einem Postprozessor vorgenommen wird.

8. Verfahren nach Anspruch 6, **dadurch gekennzeichnet, dass** die Anpassung des NC-Programms mittels der Verzerrungsparameter Online in der Maschinensteuerung vorgenommen wird.

9. Verfahren nach einem der Ansprüche 6 bis 8, **dadurch gekennzeichnet, dass** der Gasturbinenläufer (10) vor der Bearbeitung in der Kühlluftnut (19, 19') Risse (17) einer bestimmten Risstiefe aufweist, und dass das durch die Bearbeitung zu erreichende Querschnitts-Endprofil durch Art und Zustand der Risse (17) mitbestimmt wird.

## Claims

1. Method for machining a gas turbine rotor (10) which is provided with a cooling air slot (19, 19') which concentrically extends around the axis (18) of the gas turbine rotor (10) and is supplied with compressed cooling air via axial cooling air holes (14) which at the side lead into the slot base (16) of the cooling air slot (19, 19'), and the opening of which is covered by bridges (36) which are arranged in a distributed manner over the circumference and spaced apart from each other by means of gaps (38), **characterized in that** a material-removing tool (22, 25), especially a milling tool, is lowered in the gaps (38) between the bridges (36) one after the other into the cooling air slot (19, 19') and in this way the slot base (16) of the cooling air slot (19, 19') is machined over the entire circumference, and **in that** the slot base (16) of the cooling air slot (19, 19') is widened in width (b1, b2) as a result of the material removal in such a way that it has a tear-shaped cross-sectional contour with a constriction (20) which lies at the level of the bridges (36).

2. Method according to Claim 1, **characterized in that** a specific section of the cooling air slot (19, 19') is machined through each of the gaps (38), and **in that** the machined sections which are associated with adjacent gaps overlap.

3. Method according to Claim 1 or 2, **characterized in that** the material-removing tool (22, 25) is moved in a programmed controllable manner in the cooling air slot (19, 19') in a plurality of planes, **in that** the gas turbine rotor (10) is rotatably supported around its axis (18), and **in that** if the associated section of the cooling air slot (19, 19') is machined through a gap (38) the material-removing tool (22, 25) is withdrawn from the cooling air slot (19, 19'), the gas turbine rotor (10) is rotated around its axis (18) by a predetermined angle, and the material-removing tool (22, 25) is lowered in a new gap (38) into the cooling air slot (19, 19') for the machining.

4. Method according to one of Claims 1 to 3, **characterized in that** the machining of the slot base (16) is conducted in such a way that the cooling air slot (19, 19') in the slot base (16) has a crack-resistant slot shape with a notch factor of < 1.5.

5. Method according to one of Claims 1 to 4, **characterized in that** the material-removing tool (22, 25) is controlled according to an NC-program for machining the slot base (16).

6. Method according to Claim 5, **characterized in that** a component-specific cross-sectional final profile of the slot base (16) is determined from the individual operating data of the gas turbine rotor (10), **in that** the cross-sectional final profile can be created from one or more cross-sectional master profiles by the use of distortion parameters which are determined, **in that** a corresponding NC-program for controlling the material-removing tool (22, 25) is associated with each cross-sectional master profile, and **in that** the determined distortion parameters are used for adapting the NC-program for the creation of the cross-sectional final profile.

7. Method according to Claim 6, **characterized in that** the adapting of the NC-program is undertaken by means of the distortion parameters offline with a postprocessor.

8. Method according to Claim 6, **characterized in that** the adapting of the NC-program is undertaken by means of the distortion parameters online in the machine control system.

9. Method according to one of Claims 6 to 8, **characterized in that** the gas turbine rotor (10) before the machining in the cooling air slot (19, 19') has cracks (17) of a specific crack depth, and **in that** the cross-sectional final profile which is to be achieved as a result of the machining is influenced by the type and state of the cracks (17).

## Revendications

1. Procédé d'usinage d'un rotor de turbine à gaz (10), qui est pourvu d'une rainure d'air de refroidissement (19, 19') périphérique concentrique à l'axe (18) du rotor de la turbine à gaz (10), qui est alimentée en air de refroidissement comprimé par le biais d'alésages d'air de refroidissement (14) axiaux débouchant latéralement dans le fond de rainure (16) de la rainure d'air de refroidissement (19, 19'), et dont l'ouverture est recouverte par des nervures (36) réparties sur la périphérie, espacées les unes des autres par des espaces intermédiaires (38), **caractérisé en ce que** dans les espaces intermédiaires (38) entre les nervures (36), successivement, un outil d'enlèvement de matière (22, 25), en particulier un outil de fraisage, est enfoncé dans la rainure d'air de refroidissement (19, 19') et le fond de rainure (16) de la rainure d'air de refroidissement (19, 19') est usiné sur toute la périphérie, et **en ce que** le fond de rainure (16) de la rainure d'air de refroidissement (19, 19') est élargi par l'enlèvement de matière dans sa largeur (b1, b2) de telle sorte qu'il présente un contour de section transversale en forme de goutte avec un point rétréci (20) situé à la hauteur des nervures (36).

2. Procédé selon la revendication 1, **caractérisé en ce qu'**une portion définie de la rainure d'air de refroidissement (19, 19') est usinée à travers chacun des espaces intermédiaires (38), et **en ce que** les portions d'usinage associées à des espaces intermédiaires adjacents se chevauchent.

3. Procédé selon la revendication 1 ou 2, **caractérisé en ce que** l'outil d'enlèvement de matière (22, 25) est déplacé de manière commandable et programmée dans la rainure d'air de refroidissement (19, 19') dans plusieurs plans, **en ce que** le rotor de la turbine à gaz (10) est monté à rotation autour de son axe (18), et **en ce que**, lorsque la portion associée de la rainure d'air de refroidissement (19, 19') est usinée à travers un espace intermédiaire (38), l'outil d'enlèvement de matière (22, 25) est retiré de la rainure d'air de refroidissement (19, 19'), le rotor de turbine à gaz (10) est tourné d'un angle prédéfini autour de son axe (18) et l'outil d'enlèvement de matière (22, 25) est enfoncé dans un nouvel espace intermédiaire (38) pour l'usinage dans la rainure d'air de refroidissement (19, 19').

4. Procédé selon l'une quelconque des revendications 1 à 3, **caractérisé en ce que** l'usinage du fond de rainure (16) est réalisé de telle sorte que la rainure d'air de refroidissement (19, 19') dans le fond de rainure (16) présente une forme de rainure résistant aux fissures, avec un facteur d'encoche < 1, 5.

5. Procédé selon l'une quelconque des revendications 1 à 4, **caractérisé en ce que** l'outil d'enlèvement de matière (22, 25) est commandé en fonction d'un programme à commande numérique pour l'usinage du fond de rainure (16).

6. Procédé selon la revendication 5, **caractérisé en ce que** l'on détermine un profilé d'extrémité de section transversale du fond de rainure (16) individuel pour chaque composant à partir des données de fonctionnement individuelles du rotor de turbine à gaz (10), **en ce que** le profilé d'extrémité de section transversale peut être produit à partir d'un parmi plusieurs profilés maîtres de section transversale en utilisant des paramètres de déformation, qui sont déterminés, **en ce que** l'on associe à chaque profilé maître de section transversale un programme à commande numérique correspondant pour la commande de l'outil d'enlèvement de matière (22, 25), et **en ce que** les paramètres de déformation déterminés sont utilisés pour l'adaptation du programme à commande numérique pour la production du profilé d'extrémité de section transversale.

7. Procédé selon la revendication 6, **caractérisé en ce que** l'adaptation du programme à commande numérique est effectuée au moyen des paramètres de déformation hors ligne avec un post-processeur.

8. Procédé selon la revendication 6, **caractérisé en ce que** l'adaptation du programme à commande numérique au moyen des paramètres de déformation est effectuée en ligne dans la commande de machine.

9. Procédé selon l'une quelconque des revendications 6 à 8, **caractérisé en ce que** le rotor de turbine à gaz (10) présente, avant l'usinage dans la rainure d'air de refroidissement (19, 19'), des fissures (17) d'une profondeur de fissure déterminée, et **en ce que** le profilé d'extrémité de section transversale à obtenir par l'usinage est déterminé conjointement par le type et l'état des fissures (17).
